# EUROPEAN PATENT SPECIFICATION

(11) **EP 0 478 231 B1**
(45) Date of publication and mention of the grant of the patent: **29.01.1997**
(21) Application number: 91308579.1
(22) Date of filing: 20.09.1991
(51) Int. Cl.: H04Q 7/32

(54) **Method and apparatus for remotely programming a wireless telephone set**
Verfahren und Einrichtung zur Fernprogrammierung eines schnurlosen Telefons
Méthode et dispositif pour la programmation à distance d'un appareil téléphonique sans fil

(30) Priority: 28.09.1990 US 590409; 28.09.1990 US 590411
(43) Date of publication of application: 01.04.1992
(73) Proprietor: AT&T Corp., New York, NY 10013-2412 (US)
(72) Inventor: Gerszberg, Irwin, Lakewood, New Jersey 08701 (US)
(74) Representative: Buckley, Christopher Simon Thirsk

(56) References cited:
- EP-A- 0 301 573
- EP-A- 0 332 825
- WO-A-87/01537
- GB-A- 2 249 459
- US-A- 5 046 082
- PROCEEDINGS OF THE NATIONAL COMMUNICATIONS FORUM vol. 42, no. 2, 30 September 1988, OAK BROOK, ILLINOIS US pages 1706 - 1713 , XP53946 P. E. JACKSON 'PORTABLE COMMUNICATION'
- DATABASE WPIL Derwent Publications Ltd., London, GB; AN 92-124707 & DE-A-4 130 024 (OKI TELECOM)

## Description

This invention relates to methods of programming information into cellular mobile radiotelephone sets, and to remotely programmable cellular mobile radiotelephone sets.

The use of cellular mobile telecommunications has undergone substantial growth over the past few years. Due to a growing cellular customers base, cellular telephone service providers and cellular telephone service resellers are faced with serving an increased number of new subscribers demanding diversified cellular services. Also, a growing number of existing cellular subscribers tend to switch back and forth between various service providers depending on the marketing and sales incentives offered by any one of such providers to newly signed-up cellular subscribers. The foregoing shifts and variations in customer - supplier and customer - reseller relationships require programming, as well as reprogramming, of the cellular telephone sets each time a customer subscriber desires a change.

Typically, cellular service providers require that any prospective customer take the cellular telephone set, after purchasing it, to an authorized service center for programming so that such telephone set becomes an authorized cellular service user set. In the case of cellular service resellers, prospective subscribers are often asked to send the telephone set, after purchasing it, to an authorized agent for programming. In either case, the procedure is cumbersome and costly to the customer, as well as to the provider or reseller, because delays are encountered prior to the start of service. Therefore, there exists a need for a method and an apparatus for programming wireless telephone sets in a manner that quickly, reliably and cost-effectively provides telephone service to new or existing customers.

WO-A-87/01537 discloses a wireless radio telecommunication system in which mobile communicators assigned to a particular group of radiotelephone mobiles may be assigned to another group by transmitting reprogramming commands from a central service center which desires to reconfigure and create new groups of mobile subscriber units. In this arrangement, the mobile subscriber unit is already programmed to receive service and the reprogramming is initiated from a reprogramming station of the service center.

PROCEEDINGS OF THE NATIONAL COMMUNICATIONS FORUM, VOL.42, No. 2, 30 September 1988, OAK BROOK, ILLINOIS (US), pages 1706-1713, P.E.JACKSON: "PORTABLE COMMUNICATION" discloses an arrangement where system protocols for providing new network acceptances are downloaded to a mobile unit that is already authenticated.

In EP-A-0301573 a new cordless telephone is registered to an existing cordless telephone system by transmitting the product identification number of the new cordless telephone from the access unit of the system to the new cordless telephone, receiving the transmitted product identification number at the new cordless telephone and verifying that the transmitted product identification number is correctly received. In response to the verification, the system and telephone identification numbers of the new cordless telephone are transmitted from the access unit to the new cordless telephone and stored into an electrically erasable programmable read-only memory of this telephone to be used for establishing calls.

According to one aspect of this invention there is provided a method as claimed in claim 1.

According to another aspect of this invention there is provided a remotely programmable cellular mobile radiotelephone set as claimed in claim 3.

A method for remotely authorizing telecommunication service to a mobile telephone set from a control center may comprise the steps of establishing a wireless bidirectional voice communication path between the control center and the mobile telephone set for transmitting and receiving multifrequency tone signals therebetween over the voice communication path; receiving, at the control center, predetermined identification indicia associated with the mobile telephone set; and transmitting from the control center, over the voice communication path in response to the received identification indicia, service authorization tone signals allocated to the mobile telephone set. Upon receipt, at the mobile telephone set, of the service authorisation tone signals, digital representations of such tone signals are stored in a permanent memory within the set

In an illustrative embodiment of the invention, a mobile telephone set for transmitting and receiving voice and tone signals over communications channels comprises a radio transceiver, a tone signals receiver connected to the radio transceiver; actuating means for selectively placing the mobile telephone set in a program mode; means responsive to the actuating means for enabling the tone signals receiver to receive, over the voice communication channel and via the transceiver, tone signals representative of mobile service authorization codes; and means for storing the received tone signals, thereby programming the mobile telephone set with corresponding mobile service authorization codes. In a preferred embodiment, the tone signal receiver includes a dual tone multifrequency (DTMF) receiver, e.g. a touch-tone signaling receiver.

In another embodiment, a remotely programmable mobile data telephone set comprises means including a radio transceiver and a modem connected thereto for establishing wireless bidirectional voice and data communication paths between the mobile data telephone set and a control center, actuating means for selectively bridging the modem of the telephone set onto a voice communication path, means responsive to the actuating means for enabling the modem to receive, over the voice communication path, a set of predetermined service authorization signals allocated to the mobile data telephone set, and means for storing in the mobile data telephone set the received service authorization signals.

The invention will now be described by way of example with reference to the accompanying drawings, in which:
FIG. 1 is a schematic block diagram representation of a wireless telephone communication configuration embodying the invention;
FIG. 2 is a block diagram configuration of a wireless telephone set embodying the invention;
FIG. 3 is a schematic block diagram representation of a mobile data telephone communication configuration embodying the invention; and
FIG. 4 is a block diagram configuration of a mobile data telephone set embodying the invention.

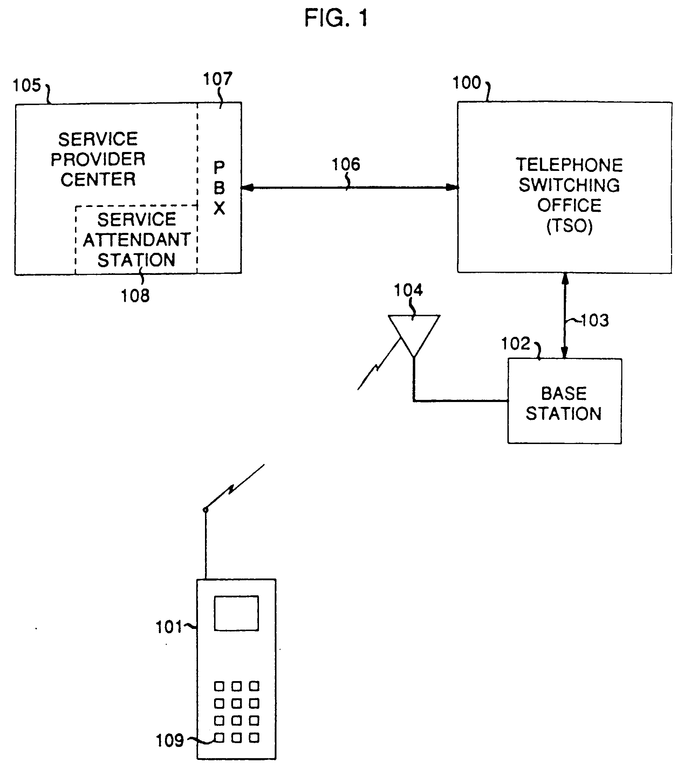

Referring now to FIG. 1, a wireless communication configuration includes a telephone switching office (TSO) 100 which is adapted to link a cellular wireless telephone set 101 into a regional or nationwide telephone network (not shown). A base station 102, coupled to the TSO 100, via a bidirectional communication link 103, is arranged to be in radio frequency communications with the wireless telephone set 101 via a radio frequency antenna 104. A communications service provider center 105 is adapted to be coupled to the TSO 100 via another bidirectional link 106. The service provider center 105 includes, interalia, a telephone private branch exchange (PBX) 107, and a service attendant station 108 coupled to the PBX 107.

Upon the purchase or lease of the wireless telephone set 101, a prospective subscriber would be assigned by the vendor or lessor a valid wireless telephone number which typically would include an area or regional code number followed by a station number. In order for the subscriber to be able to use the wireless telephone set 101, a telephone service provider or reseller, of the subscriber's choice, must authorize such use by programming the set 101 so that it is identifiable within the wireless telephone network as an authorized and legitimate wireless service subscriber/user. The programming of the set 101 is achieved by having the subscriber dial, cut of the set 101, a predermined service center number to first establish a communication path with the service provider center 105 via the radio antenna 104 and base station 102, the bidirectional link 103, the TSO 100 and the other bidirectional link 106. Once the communication path is established between the telephone set 101 and the service provider center 105, the subscriber/user can verbally, or by means of the telephone set dial, convey to an operator at the service attendant station 108 any requested subscriber-specific information. In accordance with an illustrative embodiment, the telephone set 101 is equipped with a program activating key 109 adapted to bridge an audio signal receiver (not shown), which is located within the telephone set 101, onto the then currently established communication path with the service center 105. In turn, the operator at the attendant station 108 would bridge an audio signal transmitter located at the center onto the communication path. The foregoing in effect couples the transmitter at the center 105 with the telephone set signal receiver so that the service operator can remotely enter information directly into the set 101. As mentioned above, the information intended to be entered and stored in the telephone set 101 is specific to the subscriber owner or lessee. In the case of cellular mobile communication services, such information is referred to as Number Assignment Module (NAM) designation parameters. A sample of such NAM designations that can be remotely downloaded into the telephone set 101 are listed in the following table:

| | |
|---|---|
| System Identification | 00022 |
| Telephone Number | 2013866366 |
| Access Overload Class | 06 |
| Group Identification | 10 |
| Initial Paging Channel | 0334 |
| Security Lock Code | 6366 |
| Local Use Flag | 1 |
| A/B System Selection | 1 |
| Min Mark Flag | 1 |

The service operator at the station 108 can either use a telephone keypad as means for generating and transmitting the above NAM designation parameters, or alternatively can enter the above-listed information into a data terminal, e.g. a computer, that is coupled to a signal transmitter, e.g. a DTMF generator. In the above example, a total number of NAM characters to be transmitted includes 30 digits, with each digit having a value of 0 through 9. With the addition of an initial character to denote the beginning of transmission (e.g. "*"), an ending character to indicate the end of transmission (e.g. "#"), and, for example, a three-digit cyclic redundancy check (CRC) coding segment, the information is transmitted as follows:
*000222013866366061003346366111#BBB
wherein BBB is a CRC 8 checksum byte. Once the above information is received, detected and stored in the telephone set 101, the latter is switched back into normal (i.e., voice) telephone service operation at which point the subscriber user is informed by the service operator that the telephone set 101 is fully programmed and ready for use.

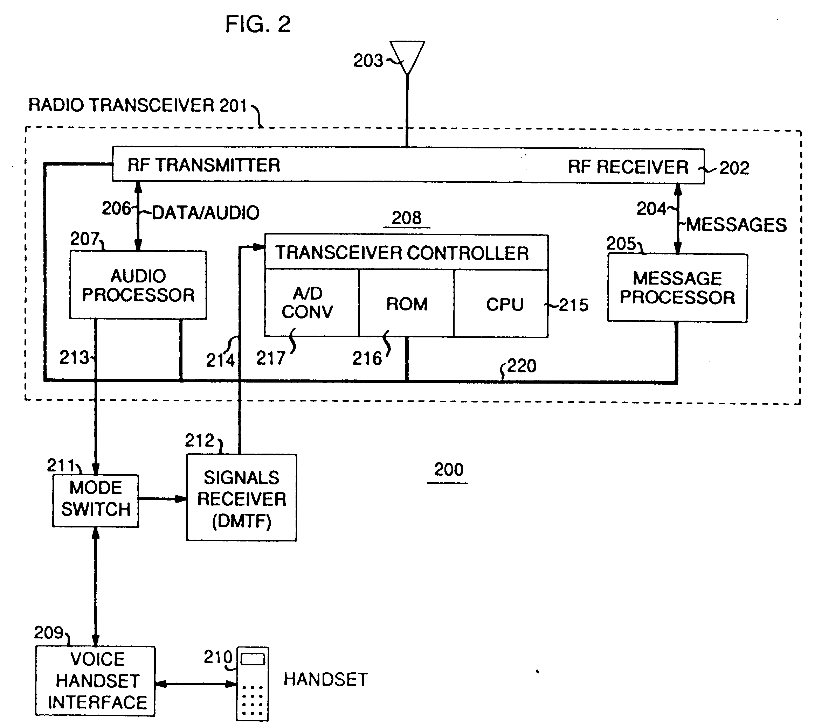

Referring now to FIG. 2, there is shown in functional block diagram form, a wireless telephone 200 in accordance with a preferred embodiment of the invention. The wireless telephone 200 comprises a radio transceiver portion 201 which includes a radio frequency receiver/transmitter 202 coupled to an antenna 203 and adapted to receive and transmit signals from and to a base station, e.g. a mobile cell site, or another wireless telephone. Coupled to the receiver/transmitter 202, via a bidirectional message connecting lead 204, is a processor 205 capable of receiving and processing system message-type signals. Also coupled to the receiver/transmitter 202, via another bidirectional lead 206, is a processor 207 adapted to process data signals as well as audio signals originating or received at the wireless telephone 200. Audio and data signals present on lead 206 are those signals intended for and derived from the antenna 203.

Within the radio transceiver 201, a controller 208 is coupled to the message processor 205 and the audio processor 207, via a control bus 220, which is also coupled to the receiver/transmitter 202. A voice handset interface circuit 209 interconnects the audio processor 207 and a telephone handset 210. In accordance with one illustrative embodiment, interposed between the voice handset interface 209 and the radio transceiver 201 is a mode switch 211, which in turn is coupled to a signals receiver 212. The latter is coupled via lead 214, to the transceiver controller 208. During the remote programming, or NAM designation parameters downloading, of the telephone set 200, the mode switch 211 diverts signals received at the antenna 203 and present on output lead 213 of the audio processor 207 to the signals receiver 212. The signals receiver 212 may be selected among known commercially available receivers, such as, for example, the Hitachi HD404678 4-bit microprocessor with an integral DTMF receiver. In the case where the programming signals out of the audio processor 207 and present on lead 213 are in digital form, the signals receiver 212 couples such digital signals to the controller 208 wherein an internal controller processing unit 215 directs such digital information for storage in a memory circuit within the controller 208, such as, for example, permanent read-only memory 216. Alternatively, if the programming information received at the antenna 203 is in the form of a sequence of tone signals, the receiver 212 (which in such case would be a tone signals receiver) would connect such signals to an analog-to-digital converter 217 located within the controller 208. The digital output signals generated by the converter 217 would next be stored in the memory circuit 216 under the control of the processing unit 215.

Variations will be apparent to those skilled in the art. For example, although the remote programming of a wireless phone is described above with reference to touch tone-type signaling, other signaling techniques and sequences, whether digitally encoded or not, may be used to accomplish the remote down loading of NAM designation parameters.

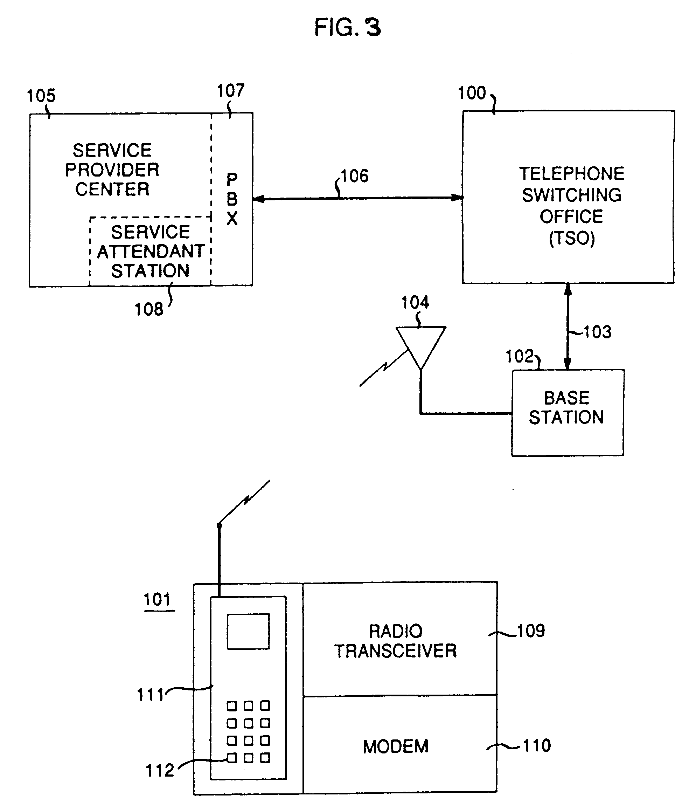

Referring now to FIG. 3, a mobile data telephone communication configuration includes a mobile telephone switching office (MTSO) 100 which is adapted to link a mobile data telephone set 101 into a regional or nationwide telephone network (not shown). A cellular base station 102, coupled to the MTSO 100, via a bidirectional voice and data communication link 103, is arranged to be in radio frequency communication with the mobile data telephone set 101 via a radio frequency antenna 104. Also shown in schematic form is a cellular communications service provider center 105 adapted to be coupled to the MTSO 100 via another bidirectional voice and data link 106. The service provider center 105 includes, inter alia, a telephone private branch exchange (PBX) 107, and a service attendant station 108 coupled to the PBX 107. As shown, the mobile data telephone set 101 comprises a radio transceiver 109, a built-in modem 110, and a voice handset 111.

The programming of the set 101 is achieved by having the subscriber dial, out of the set 101, a predetermined service center number to first establish a voice and data communication path with the cellular service provider center 105 via the radio antenna 104 and cellular base station 102, the bidirectional link 103, the MTSO 100 and the other bidirectional link 106. Once the voice and data communication path is established between the telephone set 101 and the service provider center 105, the subscriber/user can verbally, or by means of the telephone set dial, convey to an operator located at the service attendant station 108 any requested subscriber-specific information. The telephone set 101 is equipped with a program activating key 112 adapted to bridge the modem 110 located within the telephone set 101, onto the then currently established voice communication path with the cellular service center 105. In turn, the operator at the attendant station 108 would bridge, via a modem, a data transmitter located at the cellular service center onto the voice communication path. The foregoing in effect couples the modem at the center 105 with the modem 110 of the mobile data telephone set 101 so that the modems operate in the data mode. Next, the service operator can remotely enter information directly into a memory circuit of the mobile data telephone set 101.

Considering, for convenience, the same sample of NAM designations discussed in connection with fig. 1, the total number of characters needed to be transmitted is approximately 30 bytes in length, with each NAM designation entry having a value in the range of 0 through 9. With the addition of a special initial character, an ending character, and a 1 byte cyclic redundancy check (CRC) coding segment, the total number of bytes is 33 or less in most cases. Preferably, a 7-bit ASCII code is used in the transmission of the NAM designating parameters from the cellular service provider center 105 to the mobile data telephone set 101. The download sequence over a cellular voice channel begins with a start of download character "STX" (i.e., ASCII character 002 in octal code) which indicates to the software controller inside the telephone set 101 to accept the subsequent 30 bytes as NAM designation parameters. An end of download character "ETX" (i.e., ASCII character 003 in octal code) is next transmitted to indicate that the transmission of NAM parameters is now complete, to check the CRC checksum of all the digits received and to store all the NAM designation parameters in the permanent memory within the telephone set 101. A subsequent string of characters "EOT" (ASCII character 004 in octal code) is indicative that the downloading is completed, and that the mobile data telephone set may now start, or alternatively resume, cellular service operation and use.

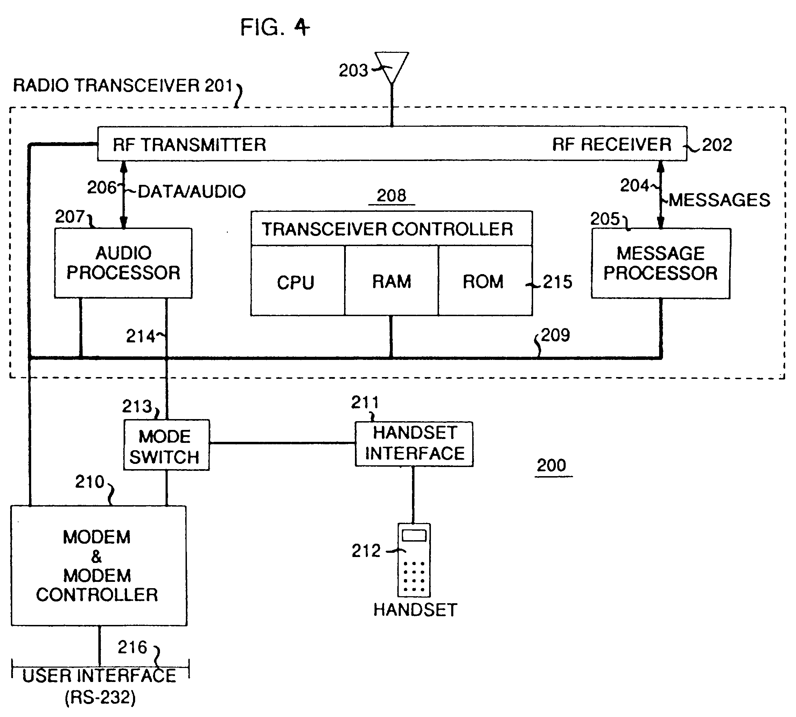

Referring now to FIG. 4, a mobile data telephone set 200 comprises a radio transceiver portion 201 which includes a radio frequency receiver/transmitter 202 coupled to an antenna 203 and adapted to receive and transmit signals from and to a mobile base station, e.g. a mobile cell site, or another mobile telephone. Coupled to the receiver/transmitter 202, via a bidirectional message connection lead 204, is a processor 205 capable of receiving and processing system message-type signals. Also coupled to the receiver/transmitter 202, via another bidirectional lead 206, is a processor 207 adapted to process data signals as well as audio signals originating or received at the mobile data telephone 200. Audio and data signals present on lead 206 are those signals intended for and derived from the antenna 203.

Within the radio transceiver 201, a controller 208 is coupled to the message processor 205 and the audio processor 207, via a control bus 209, which is also coupled to the receiver/transmitter 202, and to a modem and modem controller circuit 210. A handset interface circuit 211 interconnects the audio processor 207 and a telephone hand set 212. Interposed between the handset interface 211 and the radio transceiver 201 is a mode switch 213, which in turn is coupled to the modem circuit 210. During the remote programming, or NAM parameters downloading, of the telephone set 200, the mode switch 213 diverts a stream of signals received at the antenna 203 and present on output lead 214 of the audio processor 207 to the modem circuit 210. In such case, rather than receiving such signals and delivering them out to a modem user interface 216 (e.g., an EIA RS-232 port), the modem controller diverts the stream of signals, via the control bus 209, to the transceiver controller 208 where they are retained and stored within a permanent memory circuit 215.

As mentioned above, the stream of signals comprises a STX character, approximately 30 bytes of NAM information, an ETX character and a checksum character. Upon receipt of this stream of signals, the mobile data telephone 200 is programmed to respond back to the cellular service provider center (105 in FIG. 3) by either transmitting an acknowledgement signal "ACK" (i.e., ASCII character 006 in octal code) or a "NAK" signal (i.e., ASCII character 025 in octal code) indicating that an error occurred during transmission and that the operator at the cellular service provider should reinitiate the NAM information dowloading. Upon successfully completing a downloading operation, the cellular service provider center transmits a series of EOT characters which, when received at the mobile data telephone 200, cause the modem 210 and mode switch 213 to revert to a voice mode thereby interconnecting the handset 212 and its interface 211 to the audio processor 213. At this point, the operator at the cellular service provider center can verbally inform the telephone subscriber that the mobile data telephone set 200 is now fully programmed and ready to be used.

Variations will be apparent to those skilled in the art. For example, although the remote programming of a mobile data telephone is described above with reference to cellular analog FM channels, remote downloading of NAM designation parameters in Time Division Multiple Access (TDMA) systems and Code Division Multiple Access (CDMA) systems may be readily achieved based on the above description. One way of accomplishing such downloading is to send the NAM information as user data, which in essence is similar to sending data to a host computer on the public switched telephone network over a digital cellular system. Another way of achieving such NAM downloading is to first adopt a unique signaling message - similar to hand-off requests, RF power adjustments, blank/burst, etc. - which the mobile data telephone set responds to, and to have such message defined and sent out by a cell site at the request of the MTSO. Once a data path is established, the remaining operations and steps are identical to those described above in connection with an analog cellular system.

## Claims

1. A method for programming information into a cellular mobile radiotelephone set,
CHARACTERIZED BY:
establishing a wireless bi-directional voice communication path between the set and a distant control center over a service channel unblocked to unauthorized subscribers,
selectively placing the set in a program mode,
transmitting from the set to the control center radiotelephone set identification indicia associated with the set,
at the set, receiving from the control center a voice communication signal representative of mobile service authorization codes specific to an owner of the set in response to the identification indicia transmitted by the set,
at the set, converting the signal into telecommunication authorization codes,
at the set, storing the telecommunication authorization codes in a nonvolatile memory contained within the set, and
programming the set with corresponding service authorization codes to enable telephone service to the set.

2. A method according to claim 1, wherein the set is a wireless data telephone set.

3. A remotely programmable cellular mobile radiotelephone set, comprising:
a transmit and receive antenna (203),
a radio transceiver (201) for establishing a wireless bi-directional voice communication path between the set and a distant control centre, the transceiver being connected to the antenna and comprising a radio transmitter (202), a radio receiver (202) and an audio processor (207) for processing received and originated voice and data signals,
a voice handset (210) and a handset interface (209),
CHARACTERIZED BY:
means for providing identification indicia associated with the set for transmission from the set to the distant control centre,
a mode switch (211) for interconnecting the voice handset and handset interface to the audio processor,
a data signals receiver (212) connected to the mode switch to receive data signals represented of mobile service authorization codes sent from the distant control center, over a service channel unblocked to unauthorized subscribers, and transmitted to it by the mode switch,
a transceiver controller (208) connected to the data signals receiver and responsive to the data signals and comprising
a memory (216) for storing the data signals representing mobile service authorization codes that are specific to the set owner and operative for enabling telephone service to the set.

4. A set according to claim 3, comprising means for converting the received predetermined service authorization code signals into telecommunication service authorization digital codes.

5. A set according to claim 3 or 4, wherein the memory comprises a read-only memory.

6. A set according to claim 3, 4 or 5, wherein the data signals receiver comprises a dual tone multifrequency receiver (212).

7. A set according to claim 3, 4 or 5, wherein the data signals receiver comprises a data modem (210).

8. A set according to claim 3, 4 or 5 wherein the set is a wireless data telephone set.

9. A set according to claim 8 comprising a modem (210), and wherein the mode switch (213) serves selectively to bridge the modem onto the communication path, the modem serving to receives the predetermined service authorization code signals allocated to the wireless data telephone set.

## Patentansprüche

1. Verfahren zum Programmieren von Informationen in einen Zellenmobilfunk-Telefonapparat
gekennzeichnet durch
Aufbau eines drahtlosen, doppeltgerichteten Sprachübertragungsweges zwischen dem Telefonapparat und einer entfernten Steuerzentrale über einen Dienstkanal, der für nichtautorisierte Teilnehmer endblockiert ist,
selektives Versetzen des Telefonapparates in eine Programmierbetriebsweise,
Übertragen von dem Telefonapparat zugeordneten Funktelefonapparat-Identifizierangaben vom Telefonapparat zur Steuerzentrale,
beim Telefonapparat Empfangen eines Sprachkommunikationssignals von der Steuerzentrale, das einem Besitzer des Telefonapparates gesondert zugeordnete Mobilfunkdienst-Autorisierungscodierungen darstellt, und zwar unter Ansprechen auf die durch den Telefonapparat übertragenen Identifizierungsangaben,
beim Telefonapparat Umwandeln des Signals in Kommmunikations-Autorisierungscodierungen,
beim Telefonapparat Speichern der Kommunikations-Autorisierungscodierungen in einem nichtflüchtigen Speicher im Apparat und
Programmieren des Telefonapparates mit entsprechenden Dienstautorisierungscodierungen, um einen Telefondienst für den Apparat zu ermöglichen.

2. Verfahren nach Anspruch 1, bei dem der Telefonapparat ein drahtloser Datentelefonapparat ist.

3. Fernprogrammierbarer Zellenmobilfunk-Telefonapparat mit
einer Sende- und Empfangsantenne (203) und
einem Funksendeempfänger (201) zur Herstellung eines drahtlosen, doppeltgerichteten Sprachkommunikationsweges zwischen dem Telefonapparat und einer entfernten Steuerzentrale, wobei der Sendeempfänger mit der Antenne verbunden ist, und einen Funksender (202), einen Funkempfänger (202) sowie einen Audioprozessor (207) zur Verarbeitung von empfangenen und abgehenden Sprach- und Datensignalen aufweist, ferner mit
einem Sprachhörer (210) und einer Hörerschnittstelle (209),
gekennzeichnet durch
eine Einrichtung zur Bereitstellung von dem Telefonapparat zugeordneten Identifizierungsangaben zur Übertragung vom Telefonapparat zur entfernten Steuerzentrale,
einen Betriebsartenschalter (210) zur Verbindung des Sprachhörers und der Hörerschnittstelle mit dein Audioprozessor,
einen Datensignalempfänger (212), der mit dem Betriebsartenschalter verbunden ist, um Datensignale zu empfangen, die Mobilfunkdienst-Autorisierungscodierungen darstellen, welche von der entfernten Steuerzentrale über einen für nichtautorisierte Teilnehmer endblockierten Dienstkanal ausgesendet und zum Datensignalempfänger durch den Betriebsartenschalter übertragen werden,
ein Sendempfänger-Steuergerät (208), das mit dem Datensignalempfänger verbunden ist, auf Datensignale anspricht und
einen Speicher (216) aufweist, der die Mobilfunkdienst-Autorisierungscodierungen darstellenden Signale speichert, die dem Eigentümer des Telefonapparates gesondert zugeordnet sind, um für den Telefonapparat einen Telefondienst zu ermöglichen.

4. Telefonapparat nach Anspruch 3, mit einer Einrichtung zur Umwandlung der empfangenen, vorbestimmten Dienstautorisierungs-Codesignale in digitale Kommunikations-Dienstautorisierungscodierungen.

5. Telefonapparat nach Anspruch 3 oder 4, bei dem der Speicher einen Nur-Lese-Speicher umfaßt.

6. Telefonapparat nach Anspruch 3, 4 oder 5, bei dem der Datensignalempfänger einen Zwei-Ton-Mehrfrequenzempfänger (212) umfaßt.

7. Telefonapparat nach Anspruch 3, 4 oder 5, bei dem der Datensignalempfänger ein Datenmodem (210) umfaßt.

8. Telefonapparat nach Anspruch 3, 4 oder 5, bei dem der Telefonapparat ein drahtloser Datentelefonapparat ist.

9. Telefonapparat nach Anspruch 8, mit einem Modem (210), bei dem der Betriebsartenschalter (213) dazu dient, das Modem in den Kommunikationsweg einzuschleifen, wobei das Modem die vorbestimmten Dienstautorisierungs-Codesignale empfängt, die dem drahtlosen Datentelefonapparat zugeordnet sind.

## Revendications

1. Méthode pour la programmation d'informations dans un appareil radiotéléphonique cellulaire mobile,
CARACTERISEE PAR
l'établissement d'un chemin de communication téléphonique bidirectionnel sans fil entre l'appareil et un centre de commande distant sur une voie de service non bloquée aux abonnés non autorisés,
le placement sélectif de l'appareil dans un mode de programmation,
la transmission depuis l'appareil vers le centre de commande d'indices d'identification d'appareil radiotéléphonique associés à l'appareil,
au niveau de l'appareil, la réception à partir du centre de commande d'un signal de communication téléphonique représentatif de codes d'autorisation de service de mobile spécifiques à un propriétaire de l'appareil en réponse aux indices d'identification transmis par l'appareil,
au niveau de l'appareil, la conversion du signal en codes d'autorisation de télécommunications,
au niveau de l'appareil, la mémorisation des codes d'autorisation de télécommunications dans une mémoire non volatile contenue à l'intérieur de l'appareil, et
la programmation de l'appareil avec des codes d'autorisation de service correspondants pour valider le service téléphonique pour l'appareil.

2. Méthode conformément à la revendication 1, dans laquelle l'appareil est un appareil téléphonique de données sans fil.

3. Appareil radiotéléphonique cellulaire mobile programmable à distance, comprenant:
une antenne d'émission et de réception (203),
un émetteur-récepteur radio (201) pour établir un chemin de communication téléphonique bidirectionnel sans fil entre l'appareil et un centre de commande distant, l'émetteur-récepteur étant connecté à l'antenne et comprenant un émetteur radio (202), un récepteur radio (202) et un processeur audio (207) pour traiter les signaux de voix et de données reçus et envoyés,
un combiné téléphonique (210) et une interface de combiné (209),
CARACTERISE PAR:
un moyen de fourniture d'indices d'identification associés à l'appareil en vue de leur transmission depuis l'appareil vers le centre de commande distant,
un commutateur de mode (211) pour interconnecter le combiné téléphonique et l'interface de combiné avec le processeur audio,
un récepteur de signaux de données (212) connecté au commutateur de mode pour recevoir des signaux de données représentés par des codes d'autorisation de service de mobile envoyés par le centre de commande distant, sur une voie de service non bloquée aux abonnés non autorisés, et transmis à celui-ci par le commutateur de mode,
un contrôleur d'émetteur-récepteur (208) connecté au récepteur de signaux de données et sensible aux signaux de données et comprenant
une mémoire (216) pour mémoriser les signaux de données représentant les codes d'autorisation de service de mobile qui sont spécifiques au propriétaire de l'appareil et fonctionnant pour valider le service téléphonique pour l'appareil.

4. Appareil conformément à la revendication 3, comprenant un moyen de conversion des signaux de codes d'autorisation de service prédéterminés reçus en codes numériques d'autorisation de service de télécommunications.

5. Appareil conformément à la revendication 3 ou 4, dans lequel la mémoire comprend une mémoire morte.

6. Appareil conformément à la revendication 3, 4 ou 5, dans lequel le récepteur de signaux de données comprend un récepteur multifréquence (212).

7. Appareil conformément à la revendication 3, 4 ou 5, dans lequel le récepteur de signaux de données comprend un modem de données (210).

8. Appareil conformément à la revendication 3, 4 ou 5, dans lequel l'appareil est un appareil téléphonique de données sans fil.

9. Appareil conformément à la revendication 8, comprenant un modem (210), et dans lequel le commutateur de mode (213) sert sélectivement à coupler le modem sur le chemin de communication, le modem servant à recevoir les signaux de codes d'autorisation de service prédéterminés attribués à l'appareil téléphonique de données sans fil.
